# EUROPEAN PATENT SPECIFICATION

(11) **EP 1 950 737 B1**
(45) Date of publication and mention of the grant of the patent: **26.05.2010**
(21) Application number: 06805015.2
(22) Date of filing: 20.10.2006
(51) Int. Cl.: G10L 13/08, H04L 12/28, H04L 29/06

(54) **A METHOD, DEVICE AND SYSTEM FOR ACCOMPLISHING THE FUNCTION OF TEXT-TO-SPEECH CONVERSION**
VERFAHREN, VORRICHTUNG UND SYSTEM ZUR ERZIELUNG DER FUNKTION EINER TEXT-ZU-SPRACHE-UMSETZUNG
PROCEDE, APPAREIL ET SYSTEME POUR EXECUTER LA FONCTION DE CONVERSION TEXTE-PAROLE

(30) Priority: 21.10.2005 CN 200510114277
(43) Date of publication of application: 30.07.2008
(73) Proprietor: Huawei Technologies Co., Ltd., Longgang District, Shenzhen Guangdong 518129 (CN)
(72) Inventor: CHEN, Cheng, Guangdong 518129 (CN)
(74) Representative: Pfenning, Meinig & Partner GbR
(86) International application number: PCT/CN2006/002806
(87) International publication number: WO 2007/045187

(56) References cited:
- EP-A- 1 168 297
- EP-A- 1 341 155
- EP-A1- 1 235 406
- CN-A- 1 271 216
- CN-A- 1 390 013
- CN-A- 1 545 280
- CN-A- 1 547 190
- CN-A- 1 575 574
- US-A1- 2002 143 874
- US-A1- 2003 028 380
- US-A1- 2003 040 912
- US-A1- 2003 187 658
- US-A1- 2004 010 582

## Description

This application claims the benefit of published Chinese Patent Application No. CN 1953053 A filed on October 21, 2005, titled "METHOD FOR IMPLEMENTING THE FUNCTION OF TEXT TO SPEECH CONVERSION"

### Field of the Invention

The present invention relates to information processing technology, and in particular, to a method, device and system for implementing the function of text to speech conversion.

### Background of the Invention

The Text to Speech (TTS) technology is a technology adapted to convert Text to Speech and involves many fields such as acoustics, glossology, Digital Signal Processing (DSP) and computer science. The main problem to be solved by the TTS technology is how to convert text information into audible sound information, which is essentially different from the conventional speech playback technology. The conventional sound playback device (system), such as a tape recorder, is adapted to playback a pre-recorded speech to implement the so-called "machine speaking". Many constraints exist in the conventional sound playback technology in the content, storage, transmission, convenience and real time. However, the TTS technology implemented through the computer may convert any text into speech with a high naturalness, thus enabling a machine to speak like a man.

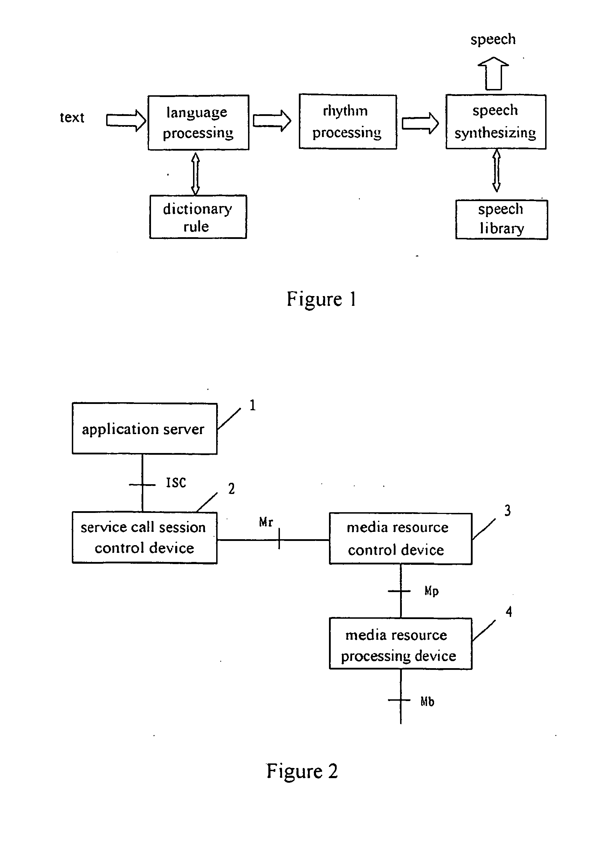

In order to synthesize high quality speech, the TTS system is required to have a good understanding of the content of the text in addition to the dependence on various rules including the semantics rule, vocabulary rule and the phonetics rule. Therefore, the understanding of the natural language is also involved. Figure 1 is a schematic diagram illustrating a complete TTS system. During the procedure of text to speech, a character sequence is first converted into a phoneme sequence and then the speech waveform is generated on the basis of the phoneme sequence by the system. The linguistics processing, such as the word segmentation and the grapheme-phoneme conversion, and a set of rhythm control rule are involved. In addition, an advanced speech synthesis technique is needed to generate a high quality speech stream in real time as required. Hence, in general, a complex conversion program is required in the TTS system for converting the character sequence to the phoneme sequence.

The TTS technology is a critical speech technology. A convenient and friendly man-machine interactive interface may be provided by using the TTS technology to convert the text information to the machine- synthesized speech. In the application system such as the telephone and embedded speech, the applicability range and the flexibility of the system are improved.

In the existing network system, there are generally two methods for an application server to play a prompt tone to a user.

The first method is to directly play a record. For example, when a user fails to call another user, the system prompts the user that "The subscriber you called is out of service". This piece of prompt tone is pre-recorded and is stored on the server. A perfect method has been provided in the H.248 protocol.

The second method is to use the TTS function. When a user call is failed, the system converts the text "The subscriber you called is out of service" to a speech and output the speech to the user.

The use of the TTS has the following advantages.

It is easy to make modification. Only the text needs to be modified while there is no need to perform re-recording.

A more personalized prompt tone, such as a male voice, female voice and neutral voice, may be played as required by users.

The second method as described above has not been defined in the H.248 protocol, and the TTS function is required to be used in the media resource application environment.
Document US 2004010582 A1, discloses an apparatus and a method for predictive provisioning of functional packages based on offered traffic and a predictive model of the offered traffic, D3 introduces the H.248 protocol between the media gateway controller and the media gateway, and introduce that the media gateway can convert a text string into a speech signal and inject it into a media stream according to the media processing algorithms.

### Summary of the Invention

The object of the present invention is to provide a method, device and system for implementing Text to Speech (TTS), so that the media processing system may convert the text to the speech and provide related speech services.
This object is solved by the method according to claim 1, the device according to claim 16 and the system according to claim 18 as well as their dependent claims.

The information related to the text string may be a combination of the text string and text string file information including the text string file ID and storage location information, in which the text string file information and the text string are combined into a continue text string and a key word is added before the text string file ID to indicate that the text string file is introduced.

Preferably, the media resource processing device combines and caches the text string which is read locally or is read from the external server with the text string carried in the H.248 message in response to the receiving of the text string file information, and then performs the TTS.

The related parameters may include:

a parameter instructing to read the text string file; in response to a command instructing to prefetch the file, a corresponding file is read from a remote server and is cached locally, otherwise, the file is read when the command is executed; and/or

a parameter indicating a time length for caching the file, adapted to set the time length for locally caching the read file.

In one embodiment the information related to the text string includes a combination of the text string and a record file ID, and a key word is added before the record file ID to indicate that the record file is introduced, and the media resource processing device performs the TTS on the text string in response to the receiving of the information related to the text string and combines a speech output after the TTS with the record file into a speech segment.

In one embodiment the information related to the text string includes a combination of the text string file information including the text string file ID and the storage location information and the record file ID, and a key word is added before the record file ID to indicate that the record file is introduced; in response to the receiving of the information related to the text string, the media resource processing device reads the text string locally or from the external server according to the storage location information and caches the text string, and then performs the TTS on the read text string and combines a speech output after the TTS with the record file into a speech segment.

Preferably, the H.248 message further carries parameters related to voice attribute of a speech output after the TTS, and the related parameters include: language type, voice gender, voice age, voice speed, volume, tone, pronunciation for special words, break, accentuation and whether the TTS is paused when the user inputs something. The media resource processing device sets corresponding attributes for an output speech in response to the receiving of the related parameters.

Preferably, the media resource processing device feeds back an error code corresponding to an abnormal event to the media resource control device when the abnormal event is detected.

The media resource control device may control the TTS during the process in which the media resource processing device performs the TTS, including:

pausing playing to the user the speech obtained from the TTS; and/or

resuming the playing from a pause state; and/or

stopping related operations by the user when the TTS is finished.

Preferably, control of the TTS by the media resource control device includes fast forward playing or fast backward playing, in which the fast forward playing includes fast forward jumping several characters, sentences or paragraphs, or fast forward jumping several seconds, or fast forward jumping several voice units; and the fast backward playing includes fast backward jumping several characters, sentences or paragraphs, or fast backward jumping several seconds, and fast backward jumping several voice units.

Preferably, controlling the TTS by the media resource control device includes:

restarting the TTS and reconfiguring the TTS parameters including tone, volume, voice speed, voice gender, voice age, accentuation position, break position and time length as required; or

repeating playing current sentence, paragraph or the whole text.

Controlling the TTS by the media resource control device may further include canceling the repeated play of current sentence, paragraph or the whole text.

An embodiment of the present invention further provides a media resource processing device according to claim 16.

An embodiment of the present invention provides a system for implementing the TTS function according to claim 18.

The media resource processing device may include a TTS unit adapted to convert a text string to a speech signal.

The information related to the text string may include a combination of the text string and a record file ID, and a key word is added before the record file ID to indicate that the record file is introduced; in response to the receiving of the combination, the media resource processing device performs the TTS on the text string and combines a speech which is output after the TTS with the record file into a speech segment.

In summary, according to the embodiments of the present invention, by extending the H.248 protocol, extended package parameters including the information related to the text string may be carried in the H.248 message, the media resource processing device may be instructed and controlled to perform the TTS according to the extended package parameters, and the result of TTS may be fed back to the media resource control device. According to the method of the present invention, service applications related to the TTS may be provided to the user in the media resource application in the mobile network or the fixed network. For example, contents of a webpage can be converted into a speech and the speech may be played for the user. Meanwhile, when it is to be modified, only the text needs to be modified while there is no need to perform re-recording, and a more personalized announcement can be played as required by the user.

### Brief Description of the Drawings

Figure 1 is a schematic diagram illustrating the principle of implementing the TTS in the prior art;

Figure 2 is a schematic diagram illustrating the network architecture for processing a media resource service in a WCDMA IP multimedia system in the prior art;

Figure 3 is a schematic diagram illustrating the network architecture for processing a media resource service in a fixed softswitch network in the prior art;

Figure 4 is a flow chart illustrating the method for implementing the TTS according to an embodiment of the present invention; and

Figure 5 is a schematic diagram illustrating the architecture of the device for implementing the TTS according to an embodiment of the present invention.

### Detailed Description of the Invention

Figure 2 is a schematic diagram illustrating the network architecture for processing media resource service in a WCDMA IMS network in the prior art. The application server 1 is adapted to process various services, such as playing announcement to a user, receiving numbers, meeting and recording. The service call session control device 2 is adapted to process routing, forward a message sent by the application server 1 to the media resource control device 3, or route a message sent by the media resource control device 3 to the application server 1. The media resource control device 3 is adapted to control media resources, select a corresponding media resource processing device 4 and control the processing of the media resources according to the requirement of the application server 1. The media resource processing device 4 is adapted to process the media resources, and complete the processing of the media resources issued by the application server 1 under the control of the media resource control device 3.

The interfaces employed among the application server 1, the service call session control device 2 and the media resource control device 3 use SIP protocol and XML protocol, or SIP protocol and a protocol similar to XML (for example, VXML). The interface employed between the media resource control device 3 and the media resource processing device 4 is an Mp interface and uses H.248 protocol. The external interface of the media resource processing device 4 is an Mb interface using RTP protocol for carrying a user media stream.

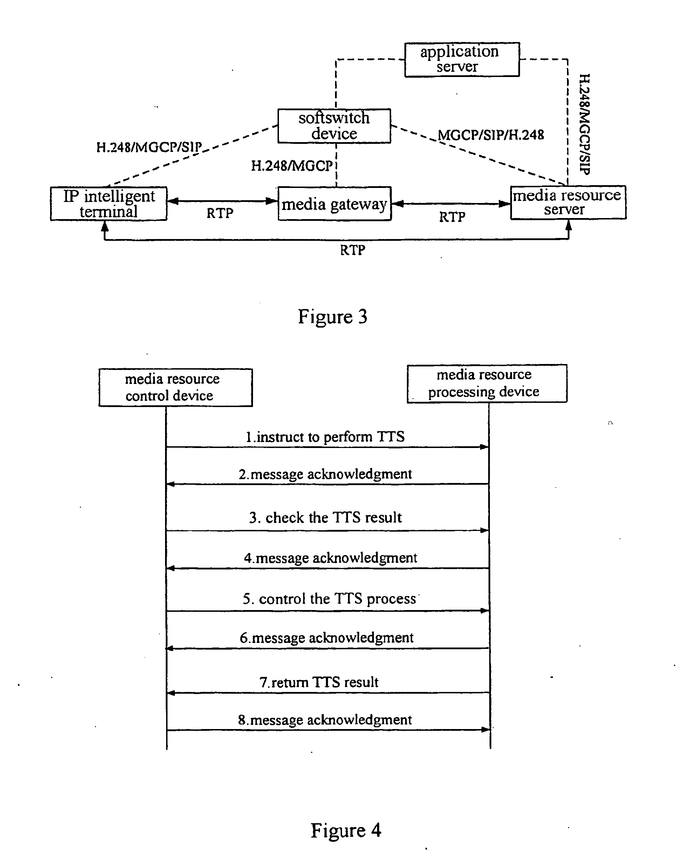

Figure 3 is a schematic diagram illustrating the network architecture for processing media resource service in a fixed softswitch network in related art. Function of the Media Resource Server (MRS) is similar to that of the media resource control device 3 and media resource processing device 4 in the WCDMA IMS network, function of the application server is similar to that of the application server 1 and service call session control device 2 in the WCDMA IMS network, and the function of the softswitch device is substantially similar to that of the application server 1.

The method for implementing the TTS via H.248 protocol according to the invention may be applied to process media resources in the WCDMA IMS network shown in Figure 2 or the fixed softswitch network shown in Figure 3. Similarly, the method may also be applied to other networks, for example, the CDMA network and fixed IMS network in which the architecture and service process flow of the media resource application scenario are basically similar to those of the WCDMA IMS network, and the WCDMA and CDMA circuit softswitch network in which the media resource application architecture and service process flow are basically similar to those of the fixed softswitch network. In other words, the invention may be applied to all the cases in which a media resource-related device is controlled via H.248 protocol to implement the TTS function.

The method for implementing the TTS function via H.248 protocol according to the invention will now be illustrated by taking the case in which the method is applied to WCDMA IMS for example, in conjunction with the drawings.

Herein, because embodiments of the invention only relate to the processing procedure between the media resource control device 3 and media resource processing device 4 shown in Figure 2 while other processes are similar to those in the existing WCDMA IMS network, for simplification, only the processing procedure between media resource control device 3 and media resource processing device 4 will be described.

Figure 4 is a flow chart illustrating the control and processing of media resources by the media resource control device 3 and media resource processing device 4.

Step 1: The media resource control device 3 sends a TTS instruction to the media resource processing device 4.

Specifically, an H.248 message carries an extended package parameter which is defined through the H.248 protocol extended package, so that the media resource control device 3 instruct the media resource processing device 4 to perform the TTS. The H.248 protocol package is defined as follows:

| | |
|---|---|
| Package Name | TTS package |
| PackageID | TTSp (0x??) |
| Description | Emitted, refer to the description of the solution below |
| Version | 1 |
| Extends | Null |

1. Properties
   Null
2. Events
   Refer to the definition in the part of "event" below.
3. Signals
   Refer to the definition in the part of "signal" below.
4. Statistics
   Null
5. Procedure
   The procedure corresponds to the flow to be described below.

Step 1: The information related to the text string is carried in a parameter of the H.248 message in a plurality of ways as follows.

1) The text string is carried in the parameter of the H.248 message.

The text string is a character string which can be pronounced correctly, such as "You are welcome!".

The format of the text string may not be recognized by a functional entity for processing the H.248 protocol and the text string is only embedded in an H.248 message as a string. In response to the receiving of the parameter, the media resource processing device 4 may directly extract the text string and transfer the extracted text string to a TTS unit for processing.

2) The text string file ID and storage location information are carried in the parameter of the H.248 message.

The text string may be prestored in the media resource processing device 4 or an external server, and the text string file ID, and the storage location information are carried in the H.248 message.

The text string file ID may be any text string which conforms to the file naming specification.

The storage location information of the text string file includes the following three forms.

I. a file which can be locally accessed directly, such as welcome.txt;

II. a file which can be accessed in file:// mode, such as file://huawei/welcome.txt; and

III. a file which can be accessed in http:// mode, such as http://huawei/ welcome.txt.

In response to the receiving of the parameter, the media resource processing device first reads the text string file from a remote server or a local storage according to the storage location of the text string file, puts the text string file into a cache, and then processes the text string file via the TTS unit.

3) Both the text string and the text string file are carried in an H.248 message parameter. The text string and the text string file are performed collectively.

The information of the text string file, in which the text string file ID and the storage location of the text string file are included, and the text string are combined into a continue text string. A specific key word is added before the text string file ID to indicate that the pronunciation text string file is introduced instead of direct conversion of the file name, such as:
<importtextfile http://huawei/welcome.txt>
Do you want to play a game?

In response to the receiving of the command for executing the pronunciation text string and the text string file collectively, the media resource processing device 4 performs preprocessing first, reads the text string file locally or from a external server, connects the text string file with the pronunciation text string as one string, and puts the string into a cache, and then performs the TTS processing.

4) The text string and/or the text string file information and the record file are carried in the H.248 message.

After TTS processing is performed on the text string or the text string file, the processed text string or the text string file is combined with the record file to form a speech segment.

A specific key word is added before the text string file ID to indicate that a record file is introduced instead of converting the file name directly, such as:
<importaudiofile http://huawei/welcome.g711>
Do you want to play a game?

In response to the receiving of the combination of the text string and/or the text string file information and the record file, the media resource processing device 4 performs preprocessing first, reads the file locally or from a remote server, puts the file into a cache, and performs the TTS processing on the text string and then combines the speech output after the TTS with the record file into a speech segment.

In addition, in step 1, attribute parameters of the speech output after the TTS may be carried in the H.248 message. When the media resource processing device is instructed to perform the TTS, the speech related parameters which can be carried include the following.

1) Language type

Various languages may be used and conform to the definition of RFC3066.

2) Voice Gender
Possible value of this parameter may be a male voice, a female voice and a neutral voice.

3) Voice Age

Possible value of this parameter may be a child voice, an adult voice and an elder voice.

4) Voice Speed

The voice speed may be faster or slower than the speed of a normal speech and is represented with percentage. For example, -20% indicates that a voice speed is slower than the speed of the normal speech by 20%.

5) Volume

The volume may be higher or lower than a normal volume and is represented with percentage. For example, -20% indicates that a volume is lower than the normal volume by 20%.

6) Tone

The tone may be higher or lower than a normal tone and is represented with percentage. For example, -20% indicates that a tone is lower than the normal tone by 20%.

7) Pronunciation for special words
This parameter is adapted to specify the pronunciation for specific words. For example, the pronunciation of "2005/10/01" is October 1, 2005.

8) Whether to set a break, the time length and position of the break

The purpose of setting the break is to conform to the pronunciation habits. The time length of the break has a value larger than 0. The possible value of the break position includes: after a sentence is read and after a paragraph is read.

9) Whether to set accentuation, accentuation grade and position

The accentuation is divided into three grades of high, medium and low. The accentuation position includes begin of a text, begin of a sentence and begin of a paragraph.

10) Whether to prefetch text string file

If this parameter indicates to prefetch a file, the file is read from a remote sever and is cached locally after a command is received, otherwise, the file is read when the command is executed.

11) Time length for caching a file

This parameter is adapted to indicate how long the file will be failed after the file is cached locally.

12) Whether the TTS needs to be paused when the user inputs a Dual Tone Multiple Frequency (DTMF) signal or speech

When the TTS and the automatic speech/DTMF recognition are performed at the same time, the TTS may be paused if the user inputs the DTMF signal or speech during the TTS.

Particularly, the H.248 protocol has defined the following.

Signal, including: 1) a signal adapted to instruct to play a TTS file, 2) a signal adapted to instruct to play a TTS string, 3) a signal adapted to instruct to play a TTS string, a TTS file and a speech segment; 4) a signal adapted to instruct to set an accentuation; 5) a signal adapted to instruct to set a break; and 6) a signal adapted to indicate special words. These signals are expressed as follows.

1) Play TTS File, this signal is adapted to instruct to perform the TTS function.

| | |
|---|---|
| Signal Name | Play TTS File |
| SignalID | ptf (0x??) |
| Description | Perform the TTS function on a text string file |
| SignalType | BR |
| Duration | Not Applicable |

Additional parameter of this signal includes the following.

| I. | |
|---|---|
| Parameter Name | TTS file |
| Parameter ID | tf (0x??) |
| Description | TTS file name and storage location |
| Type | String |
| Optional | No |
| Possible Value | Legal file ID and storage format |
| Default | Null |

| II. | |
|---|---|
| Parameter Name | Language Type |
| Parameter ID | It (0x??) |
| Description | Language Type |
| Type | String |
| Optional | No |
| Possible Value | Conform to RFC3066 protocol |
| Default | Null |

| III. | |
|---|---|
| Parameter Name | Gender |
| Parameter ID | ge (0x??) |
| Description | Voice Gender |
| Type | String |
| Optional | No |
| Possible Value | male, female and neutral |
| Default | Null |

| IV. | |
|---|---|
| Parameter Name | Age |
| Parameter ID | ag (0x??) |
| Description | Voice age |
| Type | String |
| Optional | No |
| Possible Value | Child, adult and elder |
| Default | Null |

| V. | |
|---|---|
| Parameter Name | Speed |
| ParameterID | sp (0x??) |
| Description | Voice Speed |
| Type | Integer |
| Optional | Yes |
| Possible Value | From -100% to 100% |
| Default | Null |

| VI. | |
|---|---|
| Parameter Name | Volume |
| Parameter ID | vo (0x??) |
| Description | Voice volume |
| Type | Integer |
| Optional | Yes |
| Possible Value | Between -100% and 100 % |
| Default | Null |

| VII. | |
|---|---|
| Parameter Name | Tone |
| Parameter ID | to (0x??) |
| Description | Voice tone |
| Type | Integer |
| Optional | Yes |
| Possible Value | Between -100% and 100 % |
| Default | Null |

| VIII. | |
|---|---|
| Parameter Name | Prefetch |
| Parameter ID | pf (0x??) |
| Description | Prefetch text string file |
| Type | enum |
| Optional | Yes |
| Possible Value | Yes, no |
| Default | Yes |

| IX. | |
|---|---|
| Parameter Name | Cache Time |
| Parameter ID | ct (0x??) |
| Description | Time length for caching file |
| Type | Integer |
| Optional | Yes |
| Possible Value | Larger than 0 second |
| Default | Null |

| X. | |
|---|---|
| Parameter Name | DTMF barge in |
| Parameter ID | dbi (0x??) |
| Description | Pause the TTS when the user input DTMF |
| Type | enum |
| Optional | Yes |
| Possible Value | Yes, no |
| Default | Null |

| XI. | |
|---|---|
| Parameter Name | voice barge in |
| Parameter ID | vbi (0x??) |
| Description | Pause the TTS when the user input speech |
| Type | Integer |
| Optional | Yes |
| Possible Value | Larger than 0 second |
| Default | Null |

2) Play TTS String, this signal is adapted to instruct to perform the TTS function on a text string.

| | |
|---|---|
| Signal Name | Play TTS String |
| Signal ID | pts (0x??) |
| Description | Instruct to perform the TTS function on a text string |
| Signal Type | BR |
| Duration | Not Applicable |

Additional parameter of this signal includes the following.

| I. | |
|---|---|
| Parameter Name | TTS String |
| Parameter ID | ts (0x??) |
| Description | Text string which can be pronounced |
| Type | String |
| Optional | No |
| Possible Value | Text string which can be pronounced |
| Default | Null |

Other parameters are similar to parameters II, III, IV, V, VI, VII, X and XI of the signal 'Play TTS File'.

3) Play TTS string, TTS file and speech segment

| | |
|---|---|
| Signal Name | Play union |
| SignalID | pu (0x??) |
| Description | Play a combination of a TTS string, a TTS file and a voice segment file |
| SignalType | BR |
| Duration | Not Applicable |

Additional parameter of this signal includes the following.

| I. | |
|---|---|
| Parameter Name | TTS and voice segment |
| Parameter ID | ta (0x??) |
| Description | Play a combination of a TTS string, a TTS file and a voice segment file |
| Type | String |
| Optional | No |
| Possible Value | Play a combination of a TTS string, a TTS file and a voice segment file |
| Default | Null |

Other parameters are similar to parameters II, III, N, V, VI, VII, VIII, IX, X and XI of the signal 'Play TTS File'.

4) Set Accentuation, this signal is adapted to indicate the accentuation grade and the accentuation location for TTS.

| | |
|---|---|
| Signal Name | Set Accentuation |
| SignalID | sa (0x??) |
| Description | Indicate the accentuation grade and the accentuation location for TTS. |
| SignalType | BR |
| Duration | Not Applicable |

Additional parameter of this signal includes the following.

| I. | |
|---|---|
| Parameter Name | Accentuation Position |
| Parameter ID | ap (0x??) |
| Description | Accentuation Position |
| Type | Text string |
| Optional | Yes |
| Possible Value | Begin, head of sentence and head of paragraph |
| Default | Null |

| II. | |
|---|---|
| Parameter Name | Accentuation Grade |
| Parameter ID | ag (0x??) |
| Description | Accentuation Grade |
| Type | String |
| Optional | Yes |
| Possible Value | High, medium, low |
| Default | Null |

5) Set Break, this signal is adapted to indicate the break position and the time length of the break for TTS.

| | |
|---|---|
| Signal Name | Set Break |
| SignalID | sb (0x??) |
| Description | Indicate the break position and the time length of the break for TTS |
| SignalType | BR |
| Duration | Not Applicable |

Additional parameter of this signal includes the following.

| I. | |
|---|---|
| Parameter Name | Break Position |
| Parameter ID | bp (0x??) |
| Description | Break Position |
| Type | String |
| Optional | No |
| Possible Value | End of a sentence and end of a paragraph |
| Default | Null |

| II. | |
|---|---|
| Parameter Name | Break Time |
| Parameter ID | bt (0x??) |
| Description | Time length of a break |
| Type | Integral |
| Optional | Yes |
| Possible Value | Larger than 0 millisecond |
| Default | Null |

6) Special Words, this signal is adapted to indicate the pronunciation of special words in the TTS.

| | |
|---|---|
| Signal Name | Special Words |
| SignalID | sw (0x??) |
| Description | Indicate the pronunciation of special words in the TTS |
| SignalType | BR |
| Duration | Not Applicable |

Additional parameter of this signal includes the following.

| I. | |
|---|---|
| Parameter Name | Target Words |
| Parameter ID | dw (0x??) |
| Description | Original words in the text string. |
| Type | String |
| Optional | Yes |
| Possible Value | Any |
| Default | Null |

| II. | |
|---|---|
| Parameter Name | Say As |
| Parameter ID | sa (0x??) |
| Description | A substituted pronunciation |
| Type | String |
| Optional | Yes |
| Possible Value | Any |
| Default | Null |

Step 2: In response to the receiving of the instruction from the media resource control device, the media resource processing device confirms the instruction, feeds back the confirmation information to the media resource control device, performs the TTS and plays the speech obtained via TTS to the user.

Step 3: The media resource control device 3 instructs the media resource processing device 4 to check the result of TTS.

Step 4: In response to the receiving of the instruction, the media resource processing device 4 confirms the instruction and returns confirmation information.

Step 5: The media resource control device 3 controls the process of TTS which includes: Pause: Temporarily stop the playing of the speech obtained via TTS.

Resume: Restore the playing state from the pause state.

Fast forward jump and fast forward jump to a location, including a plurality of indication ways:
1) fast forward jump several characters,
2) fast forward jump to the begin of a sentence below;
3) fast forward jump to the begin of a paragraph below;
4) fast forward jump several seconds; and
5) fast forward jump several voice units (the voice unit is defined by the user, such 10s).

Fast backward jump and fast backward jump to a location, including a plurality of indication ways:
1) fast backward jump several characters,
2) fast backward jump to the begin of a sentence above;
3) fast backward jump to the begin of a paragraph above;
4) fast backward jump several seconds; and
5) fast backward jump several voice units (the voice unit is defined by the user, such 10s).

Restart the TTS.

End the TTS: The user ends the TTS.

Repeat and the range of the repeat, including a plurality of indication ways:
1) repeat current sentence;
2) repeat current paragraph; and
3) repeat the whole text.

Cancel the repeat: Cancel the above repeat of playing.

Reconfigure the TTS parameters, including the parameters of tone, volume, voice speed, voice gender, voice age, accentuation position, break position and time length described above.

Particularly, the definition in the H.248 protocol package is as follows.

Signal: including TTS Pause.

1) TTS Pause, adapted to stop the TTS temporally.

| | |
|---|---|
| Signal Name | TTS pause |
| SignalID | tp (0x??) |
| Description | Instruct to stop the TTS temporally |
| SignalType | BR |
| Duration | Not Applicable |

Additional parameter: none.

2) TTS Resume, adapted to resume the TTS.

| | |
|---|---|
| Signal Name | TTS Resume |
| SignalID | tr (0x??) |
| Description | Instruct to resume the TTS |
| SignalType | BR |
| Duration | Not Applicable |

Additional parameter: none.

3) TTS Jump Words, adapted to instruct to jump several words for continuing the TTS.

| | |
|---|---|
| Signal Name | TTS Jump Words |
| SignalID | tjw (0x??) |
| Description | Instruct to jump to a position for continuing the TTS |
| SignalType | BR |
| Duration | Not Applicable |

Additional parameter:

| I. | |
|---|---|
| Parameter Name | Jump Size |
| Parameter ID | js (0x??) |
| Description | The number of the characters to be jumped, and a positive value represents jumping forwards and a negative value represents jumping backwards. |
| Type | Integral |
| Optional | No |
| Possible Value | Any |
| Default | Null |

4) TTS Jump Sentences, adapted to instruct to jump several sentences for continuing the TTS.

| | |
|---|---|
| Signal Name | TTS jump sentences |
| SignalID | tjs (0x??) |
| Description | Instruct to jump several sentences for continuing the TTS |
| SignalType | BR |
| Duration | Not Applicable |

Additional parameter includes:

| I. | |
|---|---|
| Parameter Name | Jump Size |
| Parameter ID | js (0x??) |
| Description | The number of the sentences to be jumped, and a positive value represents jumping forwards and a negative value represents jumping backwards. |
| Type | Integral |
| Optional | No |
| Possible Value | Any |
| Default | Null |

5) TTS Jump Paragraphs, adapted to instruct to jump several paragraphs for continuing the TTS.

| | |
|---|---|
| Signal Name | TTS Jump Paragraphs |
| SignalID | tjp (0x??) |
| Description | Instruct jumping several paragraphs for continuing the TTS |
| SignalType | BR |
| Duration | Not Applicable |

Additional parameter includes:

| I. | |
|---|---|
| Parameter Name | Jump Size |
| Parameter ID | js (0x??) |
| Description | The number of the paragraphs to be jumped, and a positive value represents jumping forwards and a negative value represents jumping backwards. |
| Type | Integral |
| Optional | No |
| Possible Value | Any |
| Default | Null |

6) TTS Jump Seconds, adapted to instruct to jump several seconds for continuing the TTS.

| | |
|---|---|
| Signal Name | TTS Jump Seconds |
| SignalID | tjs (0x??) |
| Description | Instruct to jump several seconds of speech for continuing the TTS |
| SignalType | BR |
| Duration | Not Applicable |

Additional parameter includes:

| I. | |
|---|---|
| Parameter Name | Jump Size |
| Parameter ID | js (0x??) |
| Description | The number of the seconds to be jumped, and a positive value represents jumping forwards and a negative value represents jumping backwards. |
| Type | Integral |
| Optional | No |
| Possible Value | Any |
| Default | Null |

7) TTS Jump Voice Unit, adapted to instruct to jump several voice units for continuing the TTS.

| | |
|---|---|
| Signal Name | TTS Jump Voice Unit |
| SignalID | tjvu (0x??) |
| Description | Instruct to jump several voice units for continuing the TTS, and the number of the voice unit is defmed by the user. |
| SignalType | BR |
| Duration | Not Applicable |

Additional parameter includes:

| I. | |
|---|---|
| Parameter Name | Jump Size |
| Parameter ID | js (0x??) |
| Description | The number of the voice units to be jumped, and a positive value represents jumping forward and a negative value represents jumping backward. |
| Type | Integral |
| Optional | No |
| Possible Value | Any |
| Default | Null |

8) TTS Restart

| | |
|---|---|
| Signal Name | TTS Restart |
| SignalID | tr (0x??) |
| Description | TTS restarts |
| SignalType | BR |
| Duration | Not Applicable |

Additional parameters: none.

9) TTS End

| | |
|---|---|
| Signal Name | TTS End |
| SignalID | te (0x??) |
| Description | TTS ends |
| SignalType | BR |
| Duration | Not Applicable |

Additional parameters: none.

10) TTS Repeat, adapted to instruct to repeat a section of the words obtained via the TTS.

| | |
|---|---|
| Signal Name | TTS Repeat |
| SignalID | tre (0x??) |
| Description | Repeat a section of the words obtained via the TTS. |
| SignalType | BR |
| Duration | Not Applicable |

Additional parameter includes:

| I. | |
|---|---|
| Parameter Name | Repeat position |
| Parameter ID | pos (0x??) |
| Description | Repeat position |
| Type | String |
| Optional | No |
| Possible Value | Current sentence, current paragraph, all the text. |
| Default | Null |

Step 6: In response to the receiving of the instruction, the media resource processing device 4 confirms the instruction and returns confirmation information.

Step 7: The media resource processing device 4 feeds back the events detected during the TTS, such as normal finishing and timeout, to the media resource control device 3.

The events detected during the TTS includes: an error code under an abnormal condition and a parameter for indicating the result when the TTS is finished normally.

Error codes from performing the TTS function

If an abnormal event occurs when the media resource processing device performs the TTS, a specific error code is returned to the media resource control device. The specific value of the error code is defined and allocated according to related protocols. The contents of the error code includes:
1) unrecognized words or characters;
2) unpronounceable characters;
3) absence of the text string file;
4) error in reading the text string file;
5) the parameter being not supported or error;
6) the control of the TTS being not supported or error;
7) error in hardware of the media resource processing device;
8) error in software of the media resource processing device; and
9) other errors.

Parameter for describing the result when the TTS is finished normally

The following information may be returned when the TTS is finished normally:
1) the TTS is finished normally;
2) the TTS is paused by the user input: the user presses the pause key, the user inputs the DTMF, and the user inputs a speech.
3) statistical information: the time length of the speech played after TTS to the user

Particular information is as follows.

Event:

| 1) TTS Failure | |
|---|---|
| Event Name | TTS Failure |
| EventID | ttsfail (0x??) |
| Description | TTS failed, return the error code |
| EventDescriptor Parameters | Null |

ObservedEventDescriptor parameters include:

| I. | |
|---|---|
| Parameter Name | Error Return Code |
| Parameter ID | erc (0x??) |
| Description | Error code parameter |
| Type | Integral |
| Optional | No |
| Possible Value | Error codes as defined above |
| Default | Null |

| 2) TTS Success | |
|---|---|
| Event name | TTS Success |
| EventID | ttssuss (0x??) |
| Description | TTS finished, return the result |
| EventDescriptor Parameters | Null |

ObservedEventDescriptor parameters include the following.

| I. | |
|---|---|
| Parameter Name | End Cause |
| Parameter ID | ec (0x??) |
| Description | The cause triggering the end of TTS |
| Type | Integral |
| Optional | Yes |
| Possible Value | TTS is finished, the user inputs DTMF, the user inputs speech |
| Default | Null |

| II. | |
|---|---|
| Parameter Name | TTS Time |
| Parameter ID | tt (0x??) |
| Description | The time length for performing the TTS |
| Type | Integral |
| Optional | Yes |
| Possible Value | Larger than 0 second |
| Default | Null |

Step 8: The media resource control device 3 feeds back the confirmation message to the media resource processing device 4, and the TTS is finished.

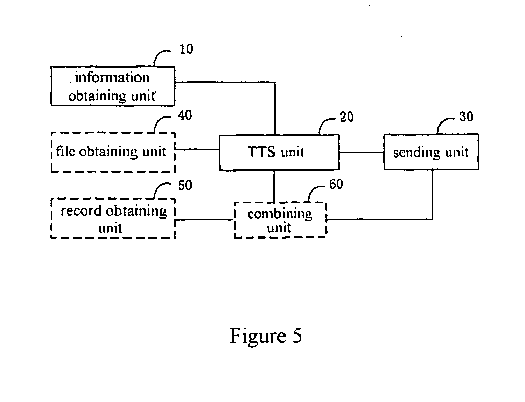

Referring to Figure 5, an embodiment of the present invention provides a media resource processing device, including:

an information obtaining unit 10, adapted to obtain control information including a text string to be recognized and control parameters sent from a media resource control device;

a TTS unit 20, adapted to convert the text string in the control information into a speech signal; and

a sending unit 30, adapted to send the speech signal to the media resource control device.

The device further includes:

a file obtaining unit 40, adapted to obtain a text string file and send the text string file to the TTS unit;

a record obtaining unit 50, adapted to obtain a record file; and

a combining unit 60, adapted to combine the speech signal output from the TTS unit with the record file to form a new speech signal and send the new speech signal to the sending unit.

Additionally, an embodiment of the present invention further provides a system for implementing the TTS function, including:

a media resource control device, adapted to extend H.248 protocol and send an H.248 message carrying an instruction and related parameters to a media resource processing device so as to control the media resource processing device to perform the TTS;

the media resource processing device, adapted to receive the H.248 message carrying a TTS instruction and the related parameters, perform the TTS according to the related parameters and feed back a result of TTS to the media resource control device.

The media resource processing device includes a TTS unit adapted to convert a text string to a speech signal.

The related parameters include information related to the text string. The media resource processing device performs the TTS on the text string according to the information related to the text string.

The information related to the text string is a text string which may be pronounced correctly. The media resource processing device directly extracts the text string in response to the receiving of the information related to the text string and performs the TTS.

The text string is prestored in the media resource processing device or an external server in the form of a file, and the information related to the text string includes a text string ID and storage location information. In response to the receiving of the information related to the text string, the media resource processing device reads the text string file locally or from the external server according to the storage location information, puts the text string file in a cache, and performs the TTS.

The information related to the text string includes a combination of the text string and a record file ID, and a key word is added before the record file ID to indicate that the record file is introduced. The media resource processing device performs the TTS on the text string in response to the receiving of the information related to the text string and combines a speech which is output after the TTS with the record file into a speech segment.

With the method according the present invention, service applications related to the TTS may be provided to the user during the media resources application in the mobile network or the fixed network. For example, contents of a webpage can be converted into a speech and the speech may be played for the user. Meanwhile, when it is to be modified, only the text needs to be modified while there is no need to perform re-recording, and a more personalized announcement can be played as required by the user.

As can be understood, the present invention is not limited to the above embodiments. Additional advantages and modifications will readily occur to those skilled in the art based on the present invention. For example, the media resource control device 3 may send the instruction of step 1 and the instruction of step 3 to the media resource processing device 4 at the same time, and media resource processing device 4 may perform step 2 and step4 at the same time.

## Claims

1. A method for implementing Text to Speech, TTS, function, wherein the TTS is implemented by extending the H.248 protocol, and the method comprises:
receiving, by a media resource processing device, an H.248 message carrying a TTS instruction sent from a media resource control device, wherein the H.248 message carries extended package parameters which are defined through the H.248 protocol extended package, the extended package parameters carry information related to a text string, the information related to the text string comprises a text string file ID and storage location information; and performing, by the media resource processing device, the TTS according to the extended package parameters in the H. 248 message and feeding back a result of the TTS to the media resource control device;
wherein the text string is prestored in the media resource processing device or an external server in the form of a file; and
wherein performing the TTS by the media resource processing device comprises:
reading the text string file locally or from the external server according to the storage location information; and
putting the text string file into a cache and performing the TTS on the text string for obtaining a speech signal.

2. The method according to claim 1, wherein the text string is prestored in the media resource processing device or the external server in the form of a file.

3. The method according to claim 1, wherein the information related to the text string is a text string and the text string file information comprising the text string file ID and the storage location information, the text string file information and the text string are combined into a continue text string and a key word is added before the text string file ID to indicate that the text string file is introduced; and the method comprising:
combining and caching a text string which is read locally or is read from the external server with the text string carried in the H.248 message in response to the receiving of the text string file information, and then performing the TTS.

4. The method according to claim 1, wherein the extended package parameters further comprise:
an extended package parameter instructing to read the text string file, wherein in response to a command instructing to prefetch the file, the media resource processing device reads a corresponding file from a remote server and caches the corresponding file locally, otherwise, the media resource processing device reads the file when the command is executed; and/or
an extended package parameter indicating a length of time for caching the file, adapted to set the length of time for locally caching the read file.

5. The method according to claim 1, wherein the information related to the text string comprises the text string and a record file ID, and a key word is added before the record file ID to indicate that the record file is introduced; and the method comprises:
performing the TTS on the text string in response to the receiving of the information related to the text string and combining the speech output after the TTS with the record file into a speech segment.

6. The method according to claim 1, wherein the information related to the text string comprises the text string file information comprising the text string file ID and the storage location information, and a record file ID before which a key word is added to indicate that the record file is introduced; and the method comprises: receiving the information related to the text string, reading the text string locally or from the external server according to the storage location information and caching the text string, and then performing the TTS on the read text string and combining the speech output after the TTS with the record file into a speech segment.

7. The method according to claim 1, wherein the H.248 message further carries parameters related to voice attribute of a speech output after the TTS, and the related parameters comprise: language type, voice gender, voice age, voice speed, volume, tone, pronunciation for special words, break, accentuation and whether the TTS is paused when the user inputs something, and the media resource processing device sets corresponding attributes for an output speech in response to the receiving of the related parameters.

8. The method according to claim 1, further comprising:
feeding back, by the media resource processing device, an error code corresponding to an abnormal event to the media resource control device when the abnormal event is detected.

9. The method according to claim 1, further comprising:
controlling, by the media resource control device, the TTS during the process in which the media resource processing device performs the TTS.

10. The method according to claim 9, wherein the control of the TTS by the media resource control device comprises pausing playing to the user the speech obtained from the TTS.

11. The method according to claim 10, wherein the control of the TTS by the media resource control device further comprises:
resuming the playing from a pause state.

12. The method according to claim 9, wherein the control of the TTS by the media resource control device further comprises: stopping related operations by the user when the TTS is finished.

13. The method according to claim 9, wherein the control of the TTS by the media resource control device comprises fast forward playing or fast backward playing, in which the fast forward playing comprises fast forward jumping several characters, sentences or paragraphs, or fast forward jumping several seconds, or fast forward jumping several voice units; and the fast backward playing comprises fast backward jumping several characters, sentences or paragraphs, or fast backward jumping several seconds, and fast backward jumping several voice units.

14. The method according to claim 9, wherein the control of the TTS by the media resource control device comprises:
restarting the TTS and reconfiguring TTS parameters comprising tone, volume, voice speed, voice age, accentuation position, break position and time length as required;
or
repeating playing current sentence, paragraph or the whole text.

15. The method according to claim 14, wherein the control of the TTS by the media resource control device comprises canceling the repeated play of current sentence, paragraph or the whole text.

16. A media resource processing device, comprising:
an information obtaining unit, adapted to obtain control information comprising an H.248 message carrying a text to speech, TTS, instruction sent from a media resource control device,
wherein the H.248 message carries are extended package parameters which are defined through the H.248 protocol extended package, the extended package parameters carry information related to a text string, the information related to the text string comprises a text string file ID and storage location information, wherein the text string is prestored in the media resource processing device or an external server in the form of a file;
a TTS unit adapted to perform the TTS according to the extended package parameters in the H.248 message wherein the TTS unit is adapted to read the text string file locally or from the external server according to the storage location information, to put the text string file into a cache and to perform the TTS on the text string for obtaining a speech signal ; and
a sending unit, adapted to send the speech signal to the media resource control device.

17. The device according to claim 16, further comprising:
a file obtaining unit, adapted to obtain a text string file and to send the text string file to the TTS unit;
a record obtaining unit, adapted to obtain a record file; and
a combining unit, adapted to combine the speech signal output from the TTS unit with the record file to form a new speech signal and to send the new speech signal to the sending unit.

18. A system for implementing a Text to Speech, TTS, function, comprising:
a media resource control device, wherein the media resource control device is in communication with a media resource processing device;
wherein the media resource control device is adapted to extend H.248 protocol and to send an H.248 message carrying a TTS instruction to the media resource processing device, and the H.248 message carries extended package parameters which are defined through the H.248 protocol extended package, the extended package parameters carry information related to a text string, the information related to the text string comprises a text string file ID and storage location information, wherein the text string is prestored in the media resource processing device or an external server in the form of a file;
wherein the media resource processing device is adapted to receive the H.248 message carrying the TTS instruction, to perform the TTS according to the extended package parameters in the H.248 message and to feed back a result of the TTS to the media resource control device;
wherein, for performing the TTS, the media resource processing device is adapted to read the text string file locally or from the external server according to the storage location information, to put the text string file into a cache, to perform the TTS on the text string for obtaining a speech signal, and to feed back a result of TTS to the media resource control device.

19. The system according to claim 18, wherein the media resource processing device comprises a TTS unit adapted to convert a text string to a speech signal.

20. The system according to claim 18, wherein the information related to the text string comprises a text string and a record file ID, and a key word is added before the record file ID to indicate that the record file is introduced; and the media resource processing device is in response to the receiving of the combination, adapted to perform the TTS on the text string and to combine a speech which is output after the TTS with the record file into a speech segment.

## Patentansprüche

1. Verfahren zum Implementieren einer Text-zu-Sprache- bzw. TTS-Funktion, wobei die TTS durch Erweitern des H.248-Protokolls implementiert wird und das Verfahren die folgenden Schritte umfasst:
Empfangen einer von einer Medienbetriebsmittel-Steuereinrichtung gesendeten H.248-Nachricht, die eine TTS-Anweisung führt, durch eine Medienbetriebsmittel-Verarbeitungseinrichtung, wobei die H.248-Nachricht Parameter der erweiterten Package führt, die durch die erweiterte Package des H.248-Protokolls definiert werden, wobei die Parameter der erweiterten Package Informationen in Bezug auf eine Textzeichenkette führen, die Informationen in Bezug auf die Textzeichenkette eine Textzeichenketten-Datei-ID und Speicherortinformationen umfassen; und
Durchführen der TTS durch die Medienbetriebsmittel-Verarbeitungseinrichtung gemäß den Parametern der erweiterten Package in der H.248-Nachricht und Rückmelden eines Ergebnisses der TTS an die Medienbetriebsmittel-Steuereinrichtung;
wobei die Textzeichenkette in der Medienbetriebsmittel-Verarbeitungseinrichtung oder in einem externen Server in Form einer Datei vorgespeichert wird; und
wobei das Durchführen der TTS durch die Medienbetriebsmittel-Verarbeitungseinrichtung Folgendes umfasst:
Lesen der Textzeichenkettendatei lokal oder aus dem externen Server gemäß den Speicherortinformationen; und
Ablegen der Textzeichenkettendatei in einen Cache und Durchführen der TTS an der Textzeichenkette zum Erhalten eines Sprachsignals.

2. Verfahren nach Anspruch 1, wobei die Textzeichenkette in der Medienbetriebsmittel-Verarbeitungseinrichtung oder in dem externen Server in Form einer Datei vorgespeichert wird.

3. Verfahren nach Anspruch 1, wobei es sich bei den Informationen in Bezug auf die Textzeichenkette um eine Textzeichenkette und die Textzeichenketten-Dateiinformationen mit der Textzeichenketten-Datei-ID und den Speicherortinformationen handelt, die Textzeichenketten-Dateiinformationen und die Textzeichenkette zu einer kontinuierlichen Textzeichenkette kombiniert werden und ein Schlüsselwort vor der Textzeichenketten-Datei-ID hinzugefügt wird, um anzugeben, dass die Textzeichenkettendatei eingerührt wird; und das Verfahren Folgendes umfasst:
Kombinieren und Cache-Speichern einer Textzeichenkette, die lokal gelesen oder aus dem externen Server gelesen wird, mit der in der H.248-Nachricht geführten Textzeichenkette als Reaktion auf den Empfang der Textzeichenketten-Dateiinformationen und dann Durchführen der TTS.

4. Verfahren nach Anspruch 1, wobei die Parameter der erweiterten Package ferner Folgendes umfassen:
einen Parameter der erweiterten Package, der anweist, die Textzeichenkettendatei zu lesen, wobei als Reaktion auf einen Befehl, der anweist, die Datei vorabzurufen, die Medienbetriebsmittel-Verarbeitungseinrichtung eine entsprechende Datei aus einem abgesetzten Server liest und die entsprechende Datei lokal Cache-speichert und
andernfalls die Medienbetriebsmittel-Verarbeitungseinrichtung die Datei liest, wenn der Befehl ausgeführt wird; und/oder
einen Parameter der erweiterten Package, der eine Zeitdauer zum Cache-Speichern der Datei angibt, der dafür ausgelegt ist, die Zeitdauer für das lokale Cache-Speichern der gelesenen Datei zu setzen.

5. Verfahren nach Anspruch 1, wobei die Informationen in Bezug auf die Textzeichenkette die Textzeichenkette und eine Datensatzdatei-ID umfassen und ein Schlüsselwort vor der Datensatzdatei-ID hinzugefügt wird, um anzugeben, dass die Datensatzdatei eingeführt wird; und das Verfahren Folgendes umfasst: Durchführen der TTS an der Textzeichenkette als Reaktion auf den Empfang der Informationen in Bezug auf die Textzeichenkette und Kombinieren der Sprachausgabe nach der TTS mit der Datensatzdatei zu einem Sprachsegment.

6. Verfahren nach Anspruch 1, wobei die Informationen in Bezug auf die Textzeichenkette die Textzeichenketten-Dateünformationen mit der Textzeichenketten-Datei-ID und den Speicherortinformationen und eine Datensatzdatei-ID umfassen, vor der ein Schlüsselwort hinzugefügt wird, um anzugeben, dass die Datensatzdatei eingeführt wird; und das Verfahren Folgendes umfasst: Empfangen der Informationen in Bezug auf die Textzeichenkette, lokales Lesen der Textzeichenkette oder aus dem externen Server gemäß den Speicherortinformationen und Cache-Speichern der Textzeichenkette und dann Durchführen der TTS an der gelesenen Textzeichenkette und Kombinieren der Sprachausgabe nach der TTS mit der Datensatzdatei zu einem Sprachsegment.

7. Verfahren nach Anspruch 1, wobei die H.248-Nachricht ferner Parameter in Bezug auf ein Sprachattribut einer Sprachausgabe nach der TTS führt und die betreffenden Parameter Folgendes umfassen: Sprachentyp, Sprachgeschlecht, Sprachalter, Sprachgeschwindigkeit, Lautstärke, Ton, Aussprache für spezielle Wörter, Pausen, Akzentuierung und ob die TTS angehalten wird, wenn der Benutzer etwas eingibt, und die Medienbetriebsmittel-Verarbeitungseinrichtung entsprechende Attribute für eine Ausgangssprache als Reaktion auf den Empfang der entsprechenden Parameter setzt.

8. Verfahren nach Anspruch 1, ferner mit dem folgenden Schritt:
Rückmelden eines einem abnormen Ereignis entsprechenden Fehlercodes durch die Medienbetriebsmittel-Verarbeitungseinrichtung an die Medienbetriebsmittel-Steuereinrichtung, wenn das abnorme Ereignis detektiert wird.

9. Verfahren nach Anspruch 1, ferner mit dem folgenden Schritt:
Steuern der TTS durch die Medienbetriebsmittel-Steuereinrichtung während des Prozesses, bei dem die Medienbetriebsmittel-Verarbeitungseiririchtung die TTS durchführt.

10. Verfahren nach Anspruch 9, wobei die Steuerung der TTS durch die Medienbetriebsmittel-Steuereinrichtung das Anhalten der Wiedergabe der aus der TTS erhaltenen Sprache für den Benutzer umfasst.

11. Verfahren nach Anspruch 10, wobei die Steuerung der TTS durch die Medienbetriebsmittel-Steuereinrichtung ferner Folgendes umfasst:
Wiederaufnehmen der Wiedergabe von einem Anhaltzustand.

12. Verfahren nach Anspruch 9, wobei die Steuerung der TTS durch die Medienbetriebsmittel-Steuereinrichtung ferner Folgendes umfasst: Stoppen betreffender Operationen durch den Benutzer, wenn die TTS beendet ist.

13. Verfahren nach Anspruch 9, wobei die Steuerung der TTS durch die Medienbetriebsmittel-Steuereinrichtung Vorspulwiedergabe oder Rückspulwiedergabe umfasst, wobei die Vorspulwiedergabe Vorspulspringen um mehrere Zeichen, Sätze oder Absätze oder Vorspulspringen um mehrere Sekunden oder Vorspulspringen um mehrere Spracheinheiten umfasst; und die Rückspulwiedergabe Rückspulspringen um mehrere Zeichen, Sätze oder Absätze oder Rückspulspringen um mehrere Sekunden und Rückspulspringen um mehrere Spracheinheiten umfasst.

14. Verfahren nach Anspruch 9, wobei die Steuerung der TTS durch die Medienbetriebsmittel-Steuereinrichtung Folgendes umfasst:
Neustarten der TTS und Umkonfigurieren von TTS-Parametern, umfassend Ton, Lautstärke, Sprachgeschwindigkeit, Sprachalter, Akzentuierungsposition, Pausenposition und Zeitlänge je nach Bedarf; oder
Wiederholen der Wiedergabe des aktuellen Satzes, Absatzes oder des gesamten Texts.

15. Verfahren nach Anspruch 14, wobei die Steuerung der TTS durch die Medienbetriebsmittel-Steuereinrichtung das Abbrechen der wiederholten Wiedergabe des aktuellen Satzes, Absatzes oder des gesamten Texts umfasst.

16. Medienbetriebsmittel-Verarbeitungseinrichtung, umfassend:
eine Informationserhaltungseinheit, die dafür ausgelegt ist, Steuerinformationen zu erhalten, die eine H.248-Nachricht umfassen, die eine von einer Medienbetriebsmittel-Steuereinrichtung gesendete Text-zu-Sprache- bzw. TTS-Anweisung führt, wobei die H.248-Nachricht Parameter der erweiterten Package führt, die durch die erweiterte Package des H.248-Protokolls definiert werden, wobei die Parameter der erweiterten Package Informationen in Bezug auf eine Textzeichenkette führen und die Informationen in Bezug auf die Textzeichenkette eine Textzeichenketten-Datei-ID und Speicherortinformationen umfassen, wobei die Textzeichenkette in der Medienbetriebsmittel-Verarbeitungseinrichtung oder in einem externen Server in Form einer Datei vorgespeichert wird;
eine TTS-Einheit, die dafür ausgelegt ist, die TTS gemäß den Parametern der erweiterten Package in der H.248-Nachricht durchzuführen, wobei die TTS-Einheit dafür ausgelegt ist, die Textzeichenkettendatei lokal oder aus dem externen Server gemäß den Speicherortinformationen zu lesen, die Textzeichenkettendatei in einen Cache abzulegen und die TTS an der Textzeichenkette zum Erhalten eines Sprachsignals durchzuführen; und
eine Sendeeinheit, die dafür ausgelegt ist, das Sprachsignal zu der Medienbetriebsmittel-Steuereinrichtung zu senden.

17. Einrichtung nach Anspruch 16, ferner umfassend:
eine Dateierhaltungseinheit, die dafür ausgelegt ist, eine Textzeichenkettendatei zu erhalten und die Textzeichenkettendatei zu der TTS-Einheit zu senden;
eine Datensatzerhaltungseinheit, die dafür ausgelegt ist, eine Datensatzdatei zu erhalten; und
eine Kombiniereinheit, die dafür ausgelegt ist, das aus der TTS-Einheit ausgegebene Sprachsignal mit der Datensatzdatei zu kombinieren, um ein neues Sprachsignal zu bilden, und das neue Sprachsignal zu der Sendeeinheit zu senden.

18. System zum Implementieren einer Text-zu-Sprache- bzw. TTS-Funktion, umfassend:
eine Medienbetriebsmittel-Steuereinrichtung, wobei die Medienbetriebsmittel-Steuereinrichtung mit einer Medienbetriebsmittel-Verarbeitungseinrichtung kommuniziert;
wobei die Medienbetriebsmittel-Steuereinrichtung dafür ausgelegt ist, das H.248-Protokoll zu erweitern und eine H.248-Nachricht, die eine TTS-Anweisung führt, zu der Medienbetriebsmittel-Verarbeitungseinrichtung zu senden, und die H.248-Nachricht Parameter der erweiterten Package führt, die durch die erweiterte Package des H.248-Protokolls definiert werden, wobei die Parameter der erweiterten Package Informationen in Bezug auf eine Textzeichenkette führen, wobei die Informationen in Bezug auf die Textzeichenkette eine Textzeichenketten-Datei-ID und Speicherortinformationen umfassen, wobei die Textzeichenkette in der Medienbetriebsmittel-Verarbeitungseinrichtung oder in einem externen Server in Form einer Datei vorgespeichert wird;
wobei die Medienbetriebsmittel-Verarbeitungseinrichtung dafür ausgelegt ist, die H.248-Nachricht, die die TTS-Anweisung führt, zu empfangen, die TTS gemäß den Parametern der erweiterten Package in der H.248-Nachricht durchzuführen und ein Ergebnis der TTS an die Medienbetriebsmittel-Steuereinrichtung zurückzumelden;
wobei zur Durchführung der TTS die Medienbetriebsmittel-Vearbeitungseinrichtung dafür ausgelegt ist, die Textzeichenkettendatei lokal oder aus dem externen Server gemäß den Speicherortinformationen zu lesen, die Textzeichenkettendatei in einen Cache abzulegen, die TTS zum Erhalten eines Sprachsignals an der Textzeichenkette durchzuführen und ein Ergebnis der TTS an die Medienbetriebsmittel-Steuereinrichtung zurückzumelden.

19. System nach Anspruch 18, wobei die Medienbetriebsmittel-Verarbeitungseinrichtung eine TTS-Einheit umfasst, die dafür ausgelegt ist, eine Textzeichenkette in ein Sprachsignal umzusetzen.

20. System nach Anspruch 18, wobei die Informationen in Bezug auf die Textzeichenkette eine Textzeichenkette und eine Datensatzdatei-ID umfassen und ein Schlüsselwort vor der Datensatzdatei-ID hinzugefügt wird, um anzugeben, dass die Datensatzdatei eingeführt wird; und die Medienbetriebsmittel-Verarbeitungseinrichtung als Reaktion auf den Empfang der Kombination dafür ausgelegt ist, die TTS an der Textzeichenkette durchzuführen und eine Sprache, die nach der TTS ausgegeben wird, mit der Datensatzdatei zu einem Sprachsegment zu kombinieren.

## Revendications

1. Procédé d'application d'une fonction de conversion Texte-Parole, TTS, la TTS étant appliquée en étendant le protocole H.248, et le procédé comprenant :
la réception, par un dispositif de traitement de ressources de média, d'un message H.248 acheminant une instruction TTS envoyée par un dispositif de commande de ressources de média, le message H.248 acheminant des paramètres de paquet étendu qui sont définis par le biais du paquet étendu de protocole H.248, les paramètres de paquet étendu acheminant des informations associées à une chaîne de texte, les informations associées à la chaîne de texte comprenant une ID de fichier de chaîne de texte et des informations de position de mémorisation ; et l'exécution, par le dispositif de traitement de ressources de média, de la TTS en fonction des paramètres de paquet étendu dans le message H.248 et le renvoi d'un résultat de la TTS au dispositif de commande de ressources de média ;
dans lequel la chaîne de texte est prémémorisée dans le dispositif de traitement de ressources de média ou un serveur externe sous forme de fichier ; et
dans lequel l'exécution de la TTS par le dispositif de traitement de ressources de média comprend :
la lecture du fichier de chaîne de texte localement ou depuis le serveur externe en fonction des informations de position de mémorisation ; et
le placement du fichier de chaîne de texte dans une antémémoire et l'exécution de la TTS sur la chaîne de texte pour obtenir un signal de parole.

2. Procédé selon la revendication 1, dans lequel la chaîne de texte est prémémorisée dans le dispositif de traitement de ressources de média ou le serveur externe sous forme de fichier.

3. Procédé selon la revendication 1, dans lequel les informations associées à la chaîne de texte sont une chaîne de texte et les informations de fichier de chaîne de texte comprenant l'ID de fichier de chaîne de texte et les informations de position de mémorisation, les informations de fichier de chaîne de texte et la chaîne de texte sont combinées en une chaîne de texte continue et un mot clé est ajouté avant l'ID de fichier de chaîne de texte pour indiquer que le fichier de chaîne de texte est introduit ; et le procédé comprenant :
la combinaison et la mise en antémémoire d'une chaîne de texte qui est lue localement ou qui est lue depuis le serveur externe, la chaîne de texte étant acheminée dans le message H.248 en réponse à la réception des informations de fichier de chaîne de texte, puis l'exécution de la TTS.

4. Procédé selon la revendication 1, dans lequel les paramètres de paquet étendu comprennent en outre :
un paramètre de paquet étendu donnant l'instruction de lire le fichier de chaîne de texte, dans lequel en réponse à une commande donnant l'instruction de prérecouvrer le fichier, le dispositif de traitement de ressources de média lit un fichier correspondant depuis un serveur distant et met en antémémoire le fichier correspondant localement, ou bien, le dispositif de traitement de ressources de média lit le fichier à l'exécution de la commande ; et/ou
un paramètre de paquet étendu indiquant une durée de mise en antémémoire du fichier, adapté pour établir la durée de mise en antémémoire locale du fichier lu.

5. Procédé selon la revendication 1, dans lequel les informations associées à la chaîne de texte comprennent la chaîne de texte et une ID de fichier d'enregistrement, et un mot clé est ajouté avant l'ID de fichier d'enregistrement pour indiquer que le fichier d'enregistrement est introduit ; et le procédé comprend : l'exécution de la TTS sur la chaîne de texte en réponse à la réception des informations associées à la chaîne de texte et la combinaison de la sortie de parole après la TTS avec le fichier d'enregistrement en un segment de parole.

6. Procédé selon la revendication 1, dans lequel les informations associées à la chaîne de texte comprennent les informations de fichier de chaîne de texte comprenant l'ID de fichier de chaîne de texte et les informations de position de mémorisation, et une ID de fichier d'enregistrement avant laquelle un mot clé est ajouté pour indiquer que le fichier d'enregistrement est introduit ; et le procédé comprend : la réception des informations associées à la chaîne de texte, la lecture de la chaîne de texte localement ou à partir du serveur externe en fonction des informations de position de mémorisation et la mise en antémémoire de la chaîne de texte, puis l'exécution de la TTS sur la chaîne de texte lue et la combinaison de la sortie de parole après la TTS avec le fichier d'enregistrement en un segment de parole.

7. Procédé selon la revendication 1, dans lequel le message H.248 achemine en outre des paramètres associés à un attribut vocal d'une sortie de parole après la TTS, et les paramètres associés comprennent : le type de langue, le genre de la voix, l'âge de la voix, le débit vocal, le volume, la tonalité, la prononciation de certains mots, les arrêts, l'accentuation et si la TTS est interrompue ou non quand l'utilisateur entre quelque chose, et le dispositif de traitement de ressources de média établit des attributs correspondants pour une parole de sortie en réponse à la réception des paramètres associés.

8. Procédé selon la revendication 1, comprenant en outre :
le renvoi, par le dispositif de traitement de ressources de média, d'un code d'erreur correspondant à un événement anormal au dispositif de commande de ressources de média à la détection de l'événement anormal.

9. Procédé selon la revendication 1, comprenant en outre :
la commande, par le dispositif de commande de ressources de média, de la TTS durant le processus par lequel le dispositif de traitement de ressources de média exécute la TTS.

10. Procédé selon la revendication 9, dans lequel la commande de la TTS par le dispositif de commande de ressources de média comprend l'interruption de la reproduction à l'utilisateur de la parole obtenue à partir de la TTS.

11. Procédé selon la revendication 10, dans lequel la commande de la TTS par le dispositif de commande de ressources de média comprend :
la reprise de la reproduction après une interruption.

12. Procédé selon la revendication 9, dans lequel la commande de la TTS par le dispositif de commande de ressources de média comprend en outre : l'arrêt d'opérations associées par l'utilisateur quand la TTS est terminée.

13. Procédé selon la revendication 9, dans lequel la commande de la TTS par le dispositif de commande de ressources de média comprend la reproduction en avance rapide ou la reproduction en recul rapide, où la reproduction en avance rapide comprend un saut en avant rapide de plusieurs caractères, phrases ou paragraphes, ou un saut en avant rapide de plusieurs secondes, ou un saut en avant rapide de plusieurs unités vocales ; et la reproduction en recul rapide comprend un saut en arrière rapide de plusieurs caractères, phrases ou paragraphes, ou un saut en arrière rapide de plusieurs secondes, et un saut en arrière rapide de plusieurs unités vocales.

14. Procédé selon la revendication 9, dans lequel la commande de la TTS par le dispositif de commande de ressources de média comprend :
la relance de la TTS et la reconfiguration des paramètres TTS dont la tonalité, le volume, le débit vocal, l'âge de la voix, la position de l'accentuation, la position des arrêts et la durée au besoin ; ou
la répétition de la reproduction de la phrase, du paragraphe ou du texte complet en cours.

15. Procédé selon la revendication 14, dans lequel la commande de la TTS par le dispositif de commande de ressources de média comprend l'annulation de la reproduction répétée de la phrase, du paragraphe ou du texte complet en cours.

16. Dispositif de traitement de ressources de média, comprenant :
une unité d'obtention d'informations, adaptée pour obtenir des informations de commande comprenant un message H.248 acheminant une instruction de conversion de Texte en Parole, TTS, envoyée par un dispositif de commande de ressources de média, le message H.248 acheminant des paramètres de paquet étendu qui sont définis par le biais du paquet étendu de protocole H.248, les paramètres de paquet étendu acheminant des informations associées à une chaîne de texte, les informations associées à la chaîne de texte comprenant une ID de fichier de chaîne de texte et des informations de position de mémorisation, dans lequel la chaîne de texte est prémémorisée dans le dispositif de traitement de ressources de média ou un serveur externe sous forme de fichier :
une unité TTS adaptée pour exécuter la TTS en fonction des paramètres de paquet étendu dans le message H.248, l'unité TTS étant adaptée pour lire le fichier de chaîne de texte localement ou depuis le serveur externe en fonction des informations de position de mémorisation, pour placer le fichier de chaîne de texte dans une antémémoire et pour exécuter la TTS sur la chaîne de texte pour obtenir un signal de parole ; et
une unité d'envoi, adaptée pour envoyer le signal de parole au dispositif de commande de ressources de média.

17. Dispositif selon la revendication 16, comprenant en outre :
une unité d'obtention de fichier, adaptée pour obtenir un fichier de chaîne de texte et
pour envoyer le fichier de chaîne de texte à l'unité TTS ;
une unité d'obtention d'enregistrement, adaptée pour obtenir un fichier d'enregistrement ; et
une unité de combinaison, adaptée pour combiner le signal de parole sorti de l'unité TTS au fichier d'enregistrement afin de former un nouveau signal de parole et pour envoyer le nouveau signal de parole à l'unité d'envoi.

18. Système d'application d'une fonction de conversion de Texte en Parole, TTS, comprenant :
un dispositif de commande de ressources de média, le dispositif de commande de ressources de média étant en communication avec un dispositif de traitement de ressources de média ;
dans lequel le dispositif de commande de ressources de média est adapté pour étendre le protocole H.248 et pour envoyer un message H.248 acheminant une instruction TTS au dispositif de traitement de ressources de média, et le message H.248 achemine des paramètres de paquet étendu qui sont définis par le biais du paquet étendu de protocole H.248, les paramètres de paquet étendu acheminent des informations associées à une chaîne de texte, les informations associées à la chaîne de texte comprennent une ID de fichier de chaîne de texte et des informations de position de mémorisation, dans lequel la chaîne de texte est prémémorisée dans le dispositif de traitement de ressources de média ou un serveur externe sous forme de fichier ;
dans lequel le dispositif de traitement de ressources de média est adapté pour recevoir le message H.248 acheminant l'instruction TTS, pour exécuter la TTS en fonction des paramètres de paquet étendu dans le message H.248 et pour renvoyer un résultat de la TTS au dispositif de commande de ressources de média, pour lire le fichier de chaîne de texte localement ou depuis le serveur externe en fonction des informations de position de mémorisation, pour placer le fichier de chaîne de texte dans une antémémoire ;
dans lequel, pour exécuter la TTS, le dispositif de traitement de ressources de média est adapté pour exécuter la TTS sur la chaîne de texte pour obtenir un signal de parole, et pour renvoyer un résultat de la TTS au dispositif de commande de ressources de média.

19. Système selon la revendication 18, dans lequel le dispositif de traitement de ressources de média comprend une unité TTS adaptée pour convertir une chaîne de texte en un signal de parole.

20. Système selon la revendication 18, dans lequel les informations associées à la chaîne de texte comprennent une chaîne de texte et une ID de fichier d'enregistrement, et un mot clé est ajouté avant l'ID de fichier d'enregistrement pour indiquer que le fichier d'enregistrement est introduit ; et le dispositif de traitement de ressources de média est, en réponse à la réception de la combinaison, adapté pour exécuter la TTS sur la chaîne de texte et pour combiner une parole qui est sortie après la TTS avec le fichier d'enregistrement en un segment de parole.
